# EUROPEAN PATENT APPLICATION

(11) **EP 4 449 882 A1**
(43) Date of publication of application: **23.10.2024**
(21) Application number: 23168605.6
(22) Date of filing: 18.04.2023
(51) Int. Cl.: A23L 7/00, A23J 3/14, A23J 3/16, A23J 3/18, A23L 7/10

(54) **NUTRITIONAL PRODUCT AND METHOD OF PRODUCING A NUTRITIONAL PRODUCT**

(71) Applicant: Michiels Fabrieken nv, 9870 Zulte (BE)
(72) Inventor: MICHIELS, Frederik, 9870 Zulte (BE); MICHIELS, Philippe, 9870 Zulte (BE)
(74) Representative: Brantsandpatents bv

(57) **Abstract**

The present invention relates to a method for producing a nutritional product, the method comprising producing a powdered nutritional semi-finished product, wherein the production of the semi-finished product comprises the following steps: a) milling a mixture of at least 20% soybeans with corn and/or wheat, b) extruding the milled mixture into an extruded product by means of an extruder; the extruder comprising an extrusion die, characterized in that the extruder comprises a constriction upstream of the extrusion die, wherein the cross-sectional area transverse to the extruder at level of the constriction is at least 10 times smaller than upstream of the constriction. The invention also relates to a nutritional product comprising an extruded blend of soybeans and corn and/or wheat, wherein the product has a nutritional value of at least 380 kcal/100 g dry weight and, after adding water in a product:water ratio of 20:80 and boiling for about 5 minutes, has a Bostwick viscosity value of at least 100 mm/30 s.

## Description

### TECHNICAL FIELD

The invention relates to a nutritional product and a method for producing a nutritional product based on cereals.

### PRIOR ART

Appropriate nutrition is essential for optimal growth and development of children. To prevent malnutrition, from the age of 6 months, in addition to breastfeeding, supplementary food that is energy and nutrient-rich is necessary to meet the recommended nutrient intake of young children.

The World Health Organization (WHO) and food aid in general provides two types of fortified blended foods, Super Cereal Plus (SC+) and Super Cereal (SC). SC+ is used as supplemental food for children 6-23 months of age, and for moderately acutely malnourished children under 5 years of age. SC+ contains corn/wheat/rice (52-58%), soy (20-25%), sugar (9%), milk powder (8%), oil (3%) and a premix of vitamins and minerals. SC is used as supplemental food for other target groups, including pregnant or lactating women, or households who receive foods with limited micronutrient content. SC is very similar to the traditional fortified blended foods based on local staples, such as rice, wheat and corn, previously known as corn-soy blend (CSB+), wheat and soy blend (WSB+) or rice and soy blend (RSB+). It contains corn/wheat/rice (57-64%), soy (24-30%) and a premix of vitamins and minerals, and sugar may be added (10-11%).

The FOA/WHO guidelines (2013) on formulated complementary foods for older infants and young children recommend an energy density of 4 kcal/g dry matter. Both SC+ and SC meet these guidelines. Further guidelines (the WHO technical note on foods for the treatment of moderate acute malnutrition (WHO, 2012) and the Codex standard for processed cereal-based foods for infants and young children (FAO/WHO, 2006)) state that the energy density of cereal-based foods for these target groups should not be less than 0.8 kcal/g in prepared porridge, porridge from SC+ in particular. However, the average energy density of prepared SC+ and SC porridges at room temperature (0.70 and 0.56 kcal/g, respectively) is lower than the recommended energy density. Kamstra et al., 2017 showed that adding amylase to flour can reduce the viscosity of the SC and SC+ porridge and thus increase the energy and nutrient density at a desired viscosity level (i.e., more dry matter can be incorporated into the same volume of porridge without increasing viscosity). This results in a higher energy and nutrient intake in young children, which is important to meet their nutrient needs.

Porridge in which amylase was added to the flour to increase the nutritional density, however, required a laborious and critical preparation method. In particular, a 1:2.5 powder:water ratio should be maintained, and it is important that the water added be cold. Subsequently, the powder and water should first be mixed, after which the porridge is heated and boiled for at least 5 minutes to ensure food safety. Such a critical preparation method is not desirable in the production of supplementary food intended for food aid. Thus, there is a need for an improved and/or more efficient method for producing such nutritional powders with increased energy and nutrient density at a desired viscosity level, and for such powders themselves.

The object of the invention is to provide a solution to at least some of the above drawbacks and/or problems, requiring users to change little to their already known way of preparing such porridge, and where the temperature of the water to be added is less critical.

### SUMMARY OF THE INVENTION

In a first aspect, the invention relates to a method for producing a nutritional product according to claim 1. More specifically, the method comprises producing a powdered nutritional semi-finished product, wherein the production of the semi-finished product comprises the following steps:
a) milling a mixture of at least 20% soybeans with corn and/or wheat,
b) extruding the milled mixture into an extruded product by means of an extruder, the extruder comprising an extrusion die,
characterized in that the extruder comprises a constriction upstream of the extrusion die, wherein the cross-sectional area transverse to the extruder at level of the constriction is at least 10 times smaller than upstream of the constriction.

In a second aspect, the invention relates to a nutritional product according to claim 12. More specifically, the nutritional product comprises an extruded blend of soybeans and corn and/or wheat in a ratio of soy:corn and/or wheat of between 20:80 and 35:65, further comprising sugars, vitamins and minerals, wherein the product has a nutritional value of at least 380 kcal/100 g dry weight and, after adding water in a product:water ratio of 20:80 and boiling for about 5 minutes, has a Bostwick viscosity value of at least 100 mm/30 s.

The advantage of the method for producing a nutritional product and the nutritional product itself is that the nutritional components are better released during production, so that the product has a higher nutritional density, without the use of externally added amylase. The product has a high nutritional value of at least 380 kcal/100 dry matter, and when water is added at a product:water ratio of 20:80 and is boiled for 5 minutes, the product has a Bostwick viscosity value of at least 100 mm/30 s. As a result, the viscosity is low enough to allow the product to be consumed easily, while with a nutritional value of at least 380 kcal/100 g dry weight, it still has a high energy and nutrient density.

### DESCRIPTION OF THE FIGURES

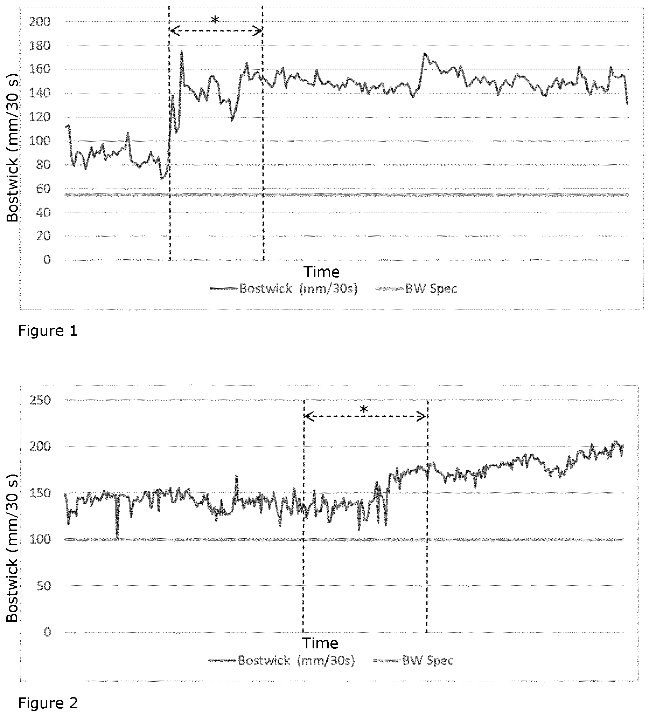

**Figures 1 and 2** schematically show the evolution of the Bostwick viscosity value, (mm/30 s) of a nutritional product produced according to a prior art method (for the period "*") and according to an embodiment of the method of the present invention (after the period "*"), when that nutritional product was added to water (15% (Fig. 1) or 17% (Fig. 2) dry matter content). During the period "*", the method of the present invention was implemented step by step.

### DETAILED DESCRIPTION

The invention relates to a method for producing a nutritional product and the nutritional product itself, wherein nutritional components are better released during production and anti-nutritional components are deactivated, so that the product has a higher nutritional density, without the use of externally added amylase. The product has a high nutritional value of at least 380 kcal/100 dry matter, and when water is added at a product:water ratio of 20:80 and then boiled for about 5 minutes, the product has a Bostwick viscosity value of at least 100 mm/30 s. As a result, the viscosity is low enough to allow the product to be consumed easily, while with a nutritional value of at least 380 kcal/100 g dry weight, it still has a high energy and nutrient density.

Unless otherwise defined, all terms used in the description of the invention, including technical and scientific terms, have the meaning as commonly understood by a person skilled in the art to which the invention pertains. For a better understanding of the description of the invention, the following terms are explained explicitly.

In this document, "a" and "the" refer to both the singular and the plural, unless the context presupposes otherwise. For example, "a segment" means one or more segments.

When the term "around" or "about" is used in this document with a measurable quantity, a parameter, a duration or moment, and the like, then variations are meant of approx. 20% or less, preferably approx. 10% or less, more preferably approx. 5% or less, even more preferably approx. 1% or less, and even more preferably approx. 0.1% or less than and of the quoted value, insofar as such variations are applicable in the described invention. However, it must be understood that the value of a quantity used where the term "about" or "around" is used, is itself specifically disclosed.

The terms "comprise," "comprising," "consist of," "consisting of," "provided with," "have," "having," "include," "including," "contain," "containing" are synonyms and are inclusive or open terms that indicate the presence of what follows, and which do not exclude or prevent the presence of other components, characteristics, elements, members, steps, as known from or disclosed in the prior art.

Quoting numerical intervals by endpoints comprises all integers, fractions and/or real numbers between the endpoints, these endpoints included.

In a first aspect, the invention relates to a method for producing a nutritional product, wherein the method comprises producing a powdered nutritional semi-finished product, wherein the production of the semi-finished product comprises the following steps:
a) milling a mixture of at least 20% soybeans with corn and/or wheat,
b) extruding the milled mixture into an extruded product by means of an extruder, the extruder comprising an extrusion die,
characterized in that the extruder comprises a constriction upstream of the extrusion die, wherein the cross-sectional area transverse to the extruder at level of the constriction is at least 10 times smaller than upstream of the constriction.

"Extruding," in the current context, is a forming technique in which a deformable material is pressed through a(n) "(extrusion) die." This technique is called extrusion or extrusion technology. Extruding is a continuous (using a screw) or discontinuous (using a press) process. There are one or more holes in the die that give the final shape of the extruded product, the extruded profile. This can be a solid or hollow section. In general, an extruder has a "single screw," also called an "extruder spindle," which pushes the material to be extruded through an extrusion die. The material is compressed at such a high pressure that it melts and/or boils. When the molten/boiling material leaves the die, it has assumed the shape of the cross-section ("extrusion profile") of the (holes in) the die. The extruded profile can then be cut. Depending on the extruded material, the (cut) extruded profile can be transported, for example by air. The (cut) product can also be cooled, for example during transport by air, or alternatively with water.

The method of the current invention as shown above has the advantage that the constriction upstream of the extrusion die ensures that the pressure in the extruder, and thus on the milled mixture during extrusion, is increased. During an extrusion process, the nutrients are released from the mixture. Among other things, this unlocks the starch. This improves the digestibility of the product. The method of the present invention increases the pressure/energy, further enhancing the release of the nutritional components from the mixture and deactivating anti-nutritional components. The prior art discusses that the pressure can also be increased directly by the screw or press, rather than by the constriction of the present invention. However, this had the disadvantage that the screw jammed or blocked. In addition to improving the unlocking of the nutritional components and deactivating anti-nutritional components, thus increasing the digestibility, the method of the present invention also solves the problem of the screw jamming when increasing the pressure. In addition, the resulting product, the nutritional product produced by this method, also has improved digestibility and a higher nutritional value/density after preparation due to the improved unlocking of the nutritional components. As also discussed further, the viscosity after preparation due to dissolving in water and boiling is also lower, making it easier to consume.

"Anti-nutritional components," also called "anti-nutritional factors" or "ANF," are components or factors, for example in raw materials or foodstuffs, that negatively influence the digestion and absorption of nutrients such as trace elements and vitamins from the food. Examples of ANF include trypsin inhibitor activity (TIA), tannin, sinapin, phytate, inositol-P and glucosinolates. Some ANF occur in multiple raw materials, and others are raw material specific.

Another option to increase the nutritional density of the nutritional product is to add amylase. However, the use of amylase to increase the nutritional density/reduce the viscosity results in a cumbersome and critical preparation method as already discussed above, which is not desirable in the production of supplementary food intended for food aid. The present invention offers an improved and more efficient method for obtaining a product with a high nutritional density and high digestibility. The nutritional product preferably has a nutritional value of at least 380 kcal/100 g dry matter, to at least 400 kcal/100 dry matter.

Reference to a quantity of "dry matter" or "dry weight" in the present invention means the substance without further addition of water/moisture. Thus, the substance will comprise at most 7%, preferably about 6% moisture.

In addition, the nutritional product produced by the current method has a Bostwick viscosity value of at least 100 mm/30 s as measured by a Bostwick consistometer after adding water in a product:water ratio of 20:80 and boiling for approximately 5 minutes. As a result, the viscosity is low enough to allow the product to be consumed easily, while with a nutritional value of at least 380 kcal/100 g dry weight, it still has a high energy and nutrient density and good digestibility.

Reference to "boiling for 5 minutes," in the present context, means that the product is heated after adding water in a certain ratio and brought to a boiling temperature for 5 minutes, counted from reaching a temperature of 95 °C.

To measure the Bostwick viscosity value, this boiled product is first given time to cool to a temperature of around 46 °C, or to a temperature at which an average person will no longer burn themselves.

According to an embodiment, the minimum temperature in the extruder is 130 °C to obtain good unlocking of the nutritional components and to deactivate the anti-nutritional components. In another or further embodiment, the maximum temperature in the extruder is 160 °C in order not to burn the nutritional components. In a further embodiment, the minimum temperature in the extruder is 130 °C and the maximum temperature is 160 °C.

According to an embodiment of the present invention, the mixture of soybeans and corn and/or wheat to be milled comprises at least 20%, preferably at least 21%, more preferably at least 22%, more preferably at least 23%, most preferably at least 24% soybeans. According to another or further embodiment, the mixture to be milled preferably comprises at least 25%, more preferably at least 26%, more preferably at least 27%, more preferably at least 28%, more preferably at least 29%, most preferably at least 30% soybeans. To this end, soybeans are mixed with corn and/or wheat. In another or further embodiment, the mixture comprises soybeans and corn, or soybeans and wheat. The soybeans used can be shelled or unshelled.

Then the mixture is milled. This can be done by any method known to a person skilled in the art, such as by means of a hammer mill.

In a subsequent step, the milled mixture is extruded by means of an extruder into an extruded product. As already discussed, an extruder comprises an extrusion die. According to an embodiment of the present invention, the die comprises between 20 and 60 holes. For example, the die may have 24 holes, or 50 holes. The number of holes in the die preferably depends on the properties of the mixture to be extruded and/or on the desired properties of the extruded product.

According to an embodiment, the extruder of the present method comprises a constriction upstream of the extrusion die, wherein the cross-sectional area transverse to the extruder at level of the constriction is at least 10 times smaller than upstream of the constriction. This constriction can be formed, for example, by means of an attachment that is placed on the end of the extruder in front of the die.

"Upstream of the die" means in the current context that the constriction is just before the die. The cross-sectional area transverse to the extruder "at the level of the constriction," i.e. just before the material is pressed through the die, is smaller than the area of such a cross-section transverse to the extruder "before" or "upstream" of the constriction.

According to an embodiment, the cross-sectional area transverse to the extruder at the level of the constriction is at least 11 times smaller, preferably at least 12 times smaller, more preferably at least 13 times smaller, more preferably at least 14 times smaller than the cross-sectional area transverse to the extruder before or upstream of the constriction. This constriction ensures that the pressure/energy on the milled mixture in the extruder before the constriction becomes high enough to optimally unlock the nutritional components and to deactivate anti-nutritional components, thus increasing digestibility, without blocking the extruder due to excessive pressure.

In another or further embodiment, the cross-sectional area transverse to the extruder at the level of the constriction is at least 10 times smaller and at most 70 times smaller than the cross-sectional area transverse to the extruder before or upstream of the constriction.

In another or further embodiment, the cross-sectional area transverse to the extruder at the level of the constriction is at most 70 times smaller, preferably at most 60 times smaller, more preferably at most 50 times smaller, more preferably at most 40 times smaller, more preferably at most 30 times smaller, more preferably at most 25 times smaller, more preferably at most 20 times smaller, most preferably at most 17 times smaller than the cross-sectional area transverse to the extruder before or upstream of the constriction.

According to an embodiment, the cross-sectional area transverse to the extruder before or upstream of the constriction is between 120 cm² and 1000 cm², preferably between 500 cm² and 1000 cm², preferably between 600 cm² and 800 cm², most preferably around 700 cm².

According to another or further embodiment, the cross-sectional area transverse to the extruder at the level of the constriction is between 3 cm² and 55 cm², preferably between 7 cm² and 20 cm². For example, the cross-sectional area transverse to the extruder at the level of the constriction may be 11 cm², 14 cm², 28 cm² or 50 cm².

According to a non-limiting example, the diameter before the constriction is about 700 cm² and the diameter at the level of the constriction is about 14 cm². The diameter at the level of the constriction is approximately 50 times smaller than before the constriction.

The cross-sectional area transverse to the extruder at the level of the constriction compared to the cross-sectional area transverse to the extruder before or upstream of the constriction is preferably chosen depending on the desired end product. The constriction ensures that the pressure/energy on the milled mixture in the extruder before the constriction becomes high enough to optimally unlock the nutritional components and to deactivate anti-nutritional components, without blocking the extruder due to excessive pressure. It is important to emphasize that without an optimal ratio between the surface area of the above cross-sections, the optimal extruded product cannot be obtained.

According to an embodiment, the extruder of the present method comprises a constriction upstream of the extrusion die, the diameter in the extruder at the level of the constriction being at least 2.5 times, at least 3 times, at least 3.5 times, at least 4 times, at least 4.5 times, at least 5 times, at least 5.5 times, at least 6 times, at least 6 times, at least 7 times, at least 7.5 times or at least 8 times smaller than upstream before the constriction. This constriction can be formed, for example, by means of an attachment that is placed on the end of the extruder in front of the die. This constriction ensures that the pressure/energy on the milled mixture in the extruder before the constriction becomes high enough to optimally unlock the nutritional components and to deactivate anti-nutritional components, thus increasing digestibility, without blocking the extruder due to excessive pressure.

According to an embodiment, the diameter in the extruder before the constriction is between 125 and 350 mm, preferably between 250 and 350 mm, preferably between 275 and 325 mm, preferably about 300 mm. According to another or further embodiment, the diameter in the extruder at the level of the constriction is between 30 and 80 mm, preferably between 30 and 50 mm. For example, the diameter may be 38 mm, 42 mm, 60 mm or 80 mm.

According to a non-limiting example, the diameter before the constriction is about 300 mm and the diameter at the level of the constriction is about 42 mm. The diameter at the level of the constriction is approximately 7.1 times smaller than before the constriction.

The diameter in the extruder before the constriction and the diameter at the level of the constriction are preferably chosen depending on the desired end product. The constriction ensures that the pressure/energy on the milled mixture in the extruder before the constriction becomes high enough to optimally unlock the nutritional components and to deactivate anti-nutritional components, without blocking the extruder due to excessive pressure. It is important to emphasize that without constriction the optimal extruded product cannot be obtained.

According to an embodiment, the method comprises a preconditioning step before the extrusion step. This involves adding 15% to 25% moisture or water to the milled mixture, preferably in the form of steam. Preferably 18-23%, more preferably 18-20% water is added to the milled mixture.

According to an embodiment, the extruder comprises a twin screw and/or one or more static elements that break the product flow. Both can be present independently of each other and have the advantage that they provide an improved mixing capacity compared to a single-screw extruder or an extruder without such static elements, which gives the extruded products exceptional properties. Thus, both the twin screw and the static elements ensure that the "flow" of the product in the extruder is broken and that the product does not remain "stuck" or "spinning" on the spot in the extruder.

Further advantages of a twin-screw extruder are greater consistency in production and control of product quality, greater flexibility, with the capacity to produce a wide range of raw materials, simple and easy maintenance saving energy and water, easier cleaning, an increase in productivity through continuous processing, fast start-up and retention between product transformation stages, fast conversion and advanced automation.

According to an embodiment, the extruded product is cut into smaller units, for example into pellets, by means of a cutting device. Optionally, the smaller units, such as pellets, are then transported, possibly via an air stream, to a storage facility where they are further dried and preferably also cooled.

According to another or further embodiment, the extruded product is then cooled, dried and milled after cutting. If the extruded product was first cut into pellets, for example, they can then be milled into powder after cooling and drying. In that case, the nutritional semi-finished product is a powder.

According to another or further embodiment, sugars, vitamins and/or minerals are further added to the nutritional semi-finished product. These vitamins and/or minerals can be added as a premix, such as premix PBF-V-13 comprising vitamin A, vitamin D3, vitamin E TE, vitamin K1, vitamin B1, vitamin B2, vitamin B6, vitamin C, patothenic acid, folate, niacin, vitamin B12, biotin, iodine, iron (a), iron (b) and zinc. Furthermore, potassium (for example as potassium chloride), calcium and phosphorus (for example as anhydrous dicalcium phosphate or tricalcium phosphate) are also preferably added.

According to another or further embodiment, skimmed milk powder and/or refined soybean oil is further added to the nutritional semi-finished product.

In a second aspect, the invention relates to a nutritional product comprising an extruded blend of soybeans and corn and/or wheat in a ratio of soy:corn and/or wheat of between 20:80 and 35:65, further comprising sugars, vitamins and minerals, wherein the product has a nutritional value of at least 380 kcal/100 g dry weight and, after adding water in a product:water ratio of 20:80 and boiling for about 5 minutes, has a Bostwick viscosity value, as measured by a Bostwick consistometer, of at least 100 mm/30 s.

As already indicated, the reference to a quantity of "dry matter" or "dry weight" in the present invention should be understood as the substance without further addition of water/moisture. Thus, the substance will comprise at most 7%, preferably about 6% moisture.

According to an embodiment, the nutritional product according to the invention is produced according to a method as described above. Preferably, no external amylase is added to the product to lower the viscosity of the prepared product. The method for producing the nutritional product of the present invention ensures that even with the addition of water in a ratio of only 20:80 product:water and boiling for about 5 minutes, the nutritional product still has a Bostwick viscosity value of at least 100 mm/30 s. As a result, the viscosity of the nutritional product is low enough for easy consumption, while with a nutritional value of at least 380 kcal/100 g dry weight, it still has a high energy and nutrient density.

According to an embodiment, the amount of water can be reduced without the Bostwick viscosity value falling below 100 mm/30 s. When the viscosity value becomes too low, the nutritional product after adding water is too viscous to be easily consumed, or too much water must be added. Preferably, the Bostwick viscosity value is at least 100 mm/30 s after addition of water in a product:water ratio of 21:79, preferably 21.5:78.5, more preferably 22:78, more preferably 22.5:77.5, more preferably 23:77, more preferably 23.5:76.5, more preferably 24:76, more preferably 24.5:75.5, and boiling for about 5 minutes. Most preferably, the Bostwick viscosity value of the nutritional product is still at least 100 mm/30 s after addition of water in a product:water ratio of at least 25:75 and boiling for about 5 minutes.

According to another or further embodiment, the product:water ratio during preparation is preferably about 1:2.5 to about 1:3, after which it is boiled for about 5 minutes.

According to an embodiment, the nutritional value of the nutritional product is minimally 380 kcal/100 g dry weight. In another or further embodiment, this minimum is 390 kcal/100 g dry weight, preferably a minimum of 400 kcal/100 g dry weight.

According to another or further embodiment, the nutritional value of the nutritional product after preparation by adding water in one of the ratios defined above in one of the embodiments and boiling for about 5 minutes is at least 0.5 kcal/g, preferably at least 0.6 kcal/g, more preferably at least 0.7 kcal/g, most preferably at least 0.8 kcal/g (at 46°C, the temperature to which the prepared product must be cooled down before consumption after boiling).

According to an embodiment, the ratio of soy:corn and/or wheat is at least 20:80, preferably at least 21:79, more preferably at least 22:78, more preferably 23:77, more preferably at least 24:76. In another or further embodiment, the ratio of soy:corn and/or wheat is at least 25:75, preferably at least 26:74, more preferably 27:73, more preferably at least 28:72, more preferably 29:71, more preferably at least 30:70, more preferably 31:69, more preferably at least 32:68, more preferably 33:67, more preferably at least 34:66, more preferably at least 35:65.

According to an embodiment, the nutritional product comprises vitamin A, vitamin D3, vitamin E TE, vitamin K1, vitamin B1, vitamin B2, vitamin B6, vitamin C, patothenic acid, folate, niacin, vitamin B12, biotin, iodine, iron (a), iron (b) and/or zinc. Further, the product also preferably comprises potassium (e.g., as potassium chloride), calcium and phosphorus (e.g., as anhydrous dicalcium phosphate or tricalcium phosphate).

According to another or further embodiment, the nutritional product further comprises skimmed milk powder and/or refined soybean oil.

In what follows, the invention is described by way of non-limiting examples illustrating the invention, and which are not intended to and should not be interpreted as limiting the scope of the invention.

### EXAMPLES

### Example 1: Method for the production of a powdered nutritional product according to an embodiment of the invention

To produce a powdered nutritional product, a semi-finished product is initially produced. For this purpose, soybeans are mixed with either wheat or corn. A soy-wheat blend comprises at least 24% soybeans and no more than 76% wheat. A soy-corn blend comprises at least 24% soybeans and no more than 73% corn. After mixing the soybeans with wheat or soybeans with corn, the mixture is milled using a hammer mill, after which the milled mixture is extruded into an extruded product.

Between the step of milling the mixture and the extrusion step, the milled mixture is preconditioned. In this regard, 18 to 20% water is added in the form of steam.

An extruder is used for extrusion, which comprises a single screw and a static element that breaks the product flow, and an extrusion die with approximately 50 holes. The screw pushes the milled mixture through the extruder towards the die, and the static elements prevent the mixture from sticking and spinning on the spot in the extruder. Just before the mixture reaches the die during the extrusion process, i.e. upstream of the die, the extruder comprises a constriction in which the diameter of the extruder before or upstream of the constriction is approximately 7 times larger than at the level of the constriction. More specifically, the diameter in the extruder just before the constriction is about 300 mm and at the level of the constriction about 42 mm, a reduction of about 7.1 times. Since the cross-sections transverse to the extruder in the extruder itself as well as at the level of the constriction of the current extruder are circular, the cross-sectional area at the level of the constriction (approximately 13.85 cm²) is about 51 times smaller than the cross-sectional area in the extruder before or upstream of the constriction (approximately 706.86 cm²). This greatly increases the pressure on the mixture in the extruder before the constriction, improving the release of the nutrients from the nutritional components of the extruded product and the deactivation of anti-nutritional components. For example, the starch is much better unlocked and the digestibility and nutritional value of the extruded product increase.

The extruded product is then cut into pellets using a cutting device, after which it is cooled, dried and milled again, now into a powder.

The powdered semi-finished product is then combined with sugar, vitamins and minerals, a calcium, phosphorus and a potassium source to form the nutritional product in the proportions below. No amylase is added to the nutritional semi-finished product or nutritional product.

| **Ingredients** | **Wt%** |
|---|---|
| Extruded product comprising wheat or corn, and soy | 88.30 |
| (wheat : soy ratio - max 76% wheat : min 24% soy) | |
| (corn : soy ratio - max 73% corn : min 24% soy) | |
| Sugar | 10.00 |
| Vitamin/Mineral premix FBF-V-13 | 0.20 |
| Anhydrous dicalcium phosphate or tricalcium phosphate | 1.23 |
| Potassium chloride | 0.27 |

The resulting nutritional product has a nutritional value of at least 380 kcal/100 g dry weight. When the nutritional powder is mixed with water at a product:water ratio of 21.5:79.5 and then boiled for 5 minutes, this aqueous product has a Bostwick viscosity value of at least 100 mm/30 s.

### Example 2: Method for the production of a powdered nutritional product according to an embodiment of the invention

To produce a powdered nutritional product, a semi-finished product is initially produced. For this purpose, shelled soybeans are mixed with either wheat or corn. In each case, the mixture comprises at least 30% soybeans and no more than 70% wheat or corn. After mixing the soybeans with wheat or soybeans with corn, the mixture is milled using a hammer mill, after which the milled mixture is extruded into an extruded product.

Between the step of milling the mixture and the extrusion step, the milled mixture is preconditioned. In this regard, 18 to 20% water is added in the form of steam.

An extruder is used for extruding, which comprises a twin screw and an extrusion die with approximately 50 holes. The twin screw pushes the milled mixture through the extruder towards the die. Just before the mixture reaches the die during the extrusion process, i.e. upstream of the die, the extruder comprises a constriction in which the diameter of the constricted extruder is approximately 7 times larger than after or downstream of the constriction. More specifically, the diameter in the extruder just before the constriction is about 300 mm and when constricted about 42 mm, a reduction of about 7.1 times. Since the cross-sections transverse to the extruder in the extruder itself as well as at the level of the constriction of the current extruder are circular, the cross-sectional area at the level of the constriction (approximately 13.85 cm²) is about 51 times smaller than the cross-sectional area in the extruder before or upstream of the constriction (approximately 706.86 cm²). This greatly increases the pressure on the mixture in the extruder before the constriction, improving the release of the nutrients from the nutritional components of the extruded product and the deactivation of anti-nutritional components. For example, the starch is much better unlocked and the digestibility and nutritional value of the extruded product increase.

The extruded product is then cut into pellets using a cutting device, after which it is cooled, dried and milled again, now into a powder.

The powdered semi-finished product is then combined with sugar, vitamins and minerals, a calcium, phosphorus and a potassium source, skimmed milk powder and refined soybean oil to form the nutritional product in the proportions below. No amylase is added to the nutritional semi-finished product or nutritional product.

| **Ingredients** | **Wt%** |
|---|---|
| Extruded product comprising wheat and shelled soybeans, or | 77.3% or |
| Extruded product comprising corn and shelled soybeans | 78.3% |
| (wheat/corn : soy ratio - max 7 wheat/corn : min 3 soy) | |
| Skimmed milk powder | 8.00 |
| Sugar | 9.00 |
| Refined soybean oil | 4.00 (wheat), or |
| | 3.00 (corn) |
| Vitamin/Mineral premix FBF-V-13 | 0.20 |
| Anhydrous dicalcium phosphate or tricalcium phosphate | 1.23 |
| Potassium chloride | 0.27 |

The resulting nutritional product has a nutritional value of at least 400 kcal/100 g dry weight. When the nutritional powder is mixed with water at a product:water ratio of 21.5:79.5 and then boiled for 5 minutes, this aqueous product has a Bostwick viscosity value of at least 100 mm/30 s.

### Example 3: Evolution of the Bostwick viscosity values of a nutritional product before and after the implementation of the method of the present invention

Figure 1 shows the Bostwick viscosity value (mm/30 s) of a nutritional product with the same composition as in Example 1, obtained by an originally used method where the extruder was not constricted, and after adapting the method to the method of the present invention and discussed in Example 1 where the extruder does have a constriction. The period of implementation of the new method is indicated with a "*". "BW spec" indicates the minimum viscosity value that must be achieved for the current product, namely 55 mm/30 s.

In the current example, a ratio of 15% dry matter (nutritional product) is added to water, after which this mixture is heated and boiled for about 5 minutes. These 5 minutes are counted from when the mixture has reached a temperature of 95 °C and is further brought to a boiling temperature.

The boiled product is then first allowed to cool to a temperature of around 46 °C before the Bostwick viscosity value is measured.

It is clear from this that the viscosity becomes much lower when the method of the present invention is used to produce the nutritional product, making it possible to increase the amount of dry matter compared to the amount of water to be added, while the product can still be easily consumed.

### Example 4: Evolution of Bostwick viscosity values of a nutritional product before and after the implementation of the method of the present invention

Figure 2 shows the Bostwick viscosity value (mm/30 s) of a nutritional product with the same composition as in Example 2, obtained by an originally used method where the extruder was not constricted, and after adapting the method to the method of the present invention and discussed in Example 2 where the extruder does have a constriction. The period of implementation of the new method is indicated with a "*". "BW spec" indicates the minimum viscosity value that must be achieved for the current product, namely 100 mm/30 s.

In the current example, a ratio of 17% dry matter (nutritional product) is added to water, after which this mixture is heated and boiled for about 5 minutes. These 5 minutes are counted from when the mixture has reached a temperature of 95 °C and is further brought to a boiling temperature.

The boiled product is then first allowed to cool to a temperature of around 46 °C before the Bostwick viscosity value is measured.

It is clear from this that the viscosity becomes much lower when the method of the present invention is used to produce the nutritional product, making it possible to increase the amount of dry matter compared to the amount of water to be added, while the product can still be easily consumed.

The present invention should not be construed as being limited to the embodiments described above and certain modifications or changes may be added to the examples described without having to re-evaluate the appended claims.

## Claims

1. Method for producing a nutritional product, wherein the method comprises producing a powdered nutritional semi-finished product, wherein the production of the semi-finished product comprises the following steps:
a) milling a mixture of at least 20% soybeans with corn and/or wheat,
b) extruding the milled mixture into an extruded product by means of an extruder, the extruder comprising an extrusion die,
**characterized in that** the extruder comprises a constriction upstream of the extrusion die, wherein the cross-sectional area transverse to the extruder at level of the constriction is at least 10 times smaller than upstream of the constriction.

2. The method according to claim 1, wherein the method for the extrusion step comprises a preconditioning step, in which 15-25%, preferably 18-20% water, such as in the form of steam, is added to the milled mixture.

3. The method according to any of the preceding claims, wherein the cross-sectional area transverse to the extruder upstream of the constriction is between 120 cm² and 1000 cm², preferably about 700 cm².

4. The method according to any of the preceding claims, wherein the cross-sectional area transverse to the extruder at the level of the constriction is between 7 cm² and 55 cm², preferably between 7 cm² and 20 cm².

5. The method according to any of the preceding claims, wherein the diameter in the extruder before the constriction is between 125 and 350 mm, preferably 300 mm.

6. The method according to any of the preceding claims, wherein the extrusion die has 20 to 60 holes.

7. The method according to any of the preceding claims, wherein the extruder comprises a twin screw and/or one or more static elements that break a product flow.

8. The method according to any of the preceding claims, wherein the extruded product is cut by means of a cutting device.

9. The method according to any of the preceding claims, wherein the extruded product is subsequently cooled, dried and milled.

10. The method according to any of the preceding claims, wherein sugars, vitamins and/or minerals are further added to the nutritional semi-finished product.

11. The method according to any of the preceding claims, wherein skimmed milk powder and/or refined soybean oil are further added to the nutritional semi-finished product.

12. A nutritional product comprising an extruded blend of soybeans and corn and/or wheat in a ratio of soy:corn and/or wheat of between 20:80 and 35:65, further comprising sugars, vitamins and minerals, the product having a nutritional value of at least 380 kcal/100 g dry weight, preferably 400 kcal/100 g dry weight, and after addition of water in a product:water ratio of 20:80 and boiling for about 5 minutes, having a Bostwick viscosity value of at least 100 mm/30s.

13. The nutritional product according to claim 12, wherein the Bostwick viscosity value is at least 100 mm/30 s after adding water in a product:water ratio of 21:79, preferably 21.5:78.5, and boiling for about 5 minutes.

14. The nutritional product according to any of the preceding claims 12-13, wherein the ratio of soy:corn and/or wheat is at least 24:76, preferably at least 30:70.

15. The nutritional product according to any of claims 12-14, produced by the method according to any of claims 1-11.
